# EUROPÄISCHE PATENTSCHRIFT

(11) **EP 1 514 772 B1**
(45) Veröffentlichungstag und Bekanntmachung des Hinweises auf die Patenterteilung: **27.08.2008**
(21) Anmeldenummer: 04014088.1
(22) Anmeldetag: 16.06.2004
(51) Int. Cl.: B62D 35/02

(54) **Aerodynamisch ausgebildetes Verkleidungsteil für die Unterseite eines Kraftfahrzeuges**
Aerodynamical panel element for the underside of a vehicle
Elément d'habillage aérodynamique pour le dessous d'un véhicule

(30) Priorität: 10.09.2003 DE 10341642
(43) Veröffentlichungstag der Anmeldung: 16.03.2005
(73) Patentinhaber: Dr. Ing. h.c. F. Porsche Aktiengesellschaft, 70435 Stuttgart (DE)
(72) Erfinder: Gürtler, Tom, 70839 Gerlingen (DE)

(56) Entgegenhaltungen:
- DE-A- 3 617 538
- DE-A- 4 429 924
- DE-B- 1 286 917
- US-A1- 2003 168 267

## Beschreibung

Die Erfindung bezieht sich auf ein aerodynamisch ausgebildetes Verkleidungsteil für die Unterseite eines Kraftfahrzeuges, insbesondere Personenwagens, wobei am Verkleidungsteil wenigstens eine Belüftungsöffnung vorgesehen ist, durch die ein Teilluftstrom der zwischen dem Verkleidungsteil und der Fahrbahn im Fahrbetrieb hindurchströmenden kalten Frischluft zu einem darüber liegenden, Aggregate und/oder Fahrwerksteile aufnehmenden Raum wie Motor- und/oder Getrieberaum oder dgl. geleitet wird und die dort befindlichen Aggregate und/oder Fahrwerksteile kühlt.

Die aerodynamische Optimierung von Fahrzeugen findet in steigendem Maße an der Unterseite des Fahrzeuges statt. Hierbei ist man bestrebt, einen glattflächig verkleideten Unterboden zu realisieren. Diese Verkleidungen haben jedoch den Nachteil, dass sich abgedeckte Bereiche stärker erwärmen. Der Grund ist der ungenügende Austausch von erwärmter Luft im Motor- und Getrieberaum und frischer kühlender Luft. Die bekannten Belüftungsöffnungen ermöglichen die gezielte Zuführung kalter Frischluft.

Problematisch hierbei ist jedoch, wenn sich schon erwärmte Abluft mit der zur Kühlung vorgesehenen Frischluft vermischt oder Zu- und Abluftführungen falsch ausgelegt oder nicht vorhanden sind. Weiterhin werden die aerodynamischen Vorteile eines glatten Unterbodens durch konventionelle Belüftungskonzepte deutlich beeinträchtigt.

Aus der DE-AS 1 286 917 geht ein Personenkraftwagen hervor, der an seiner Unterseite mit einem aerodynamisch ausgebildeten Verkleidungsteil versehen ist. Unter dem Motor ist am Verkleidungsteil ein Grill in Form von mehreren Schlitzen zur Belüftung des Motorraumes vorgesehen.

Im Fahrbetrieb wird bei dieser Anordnung ein Teilluftstrom der zwischen dem Verkleidungsteil und der Fahrbahn hindurchgeführten kalten Frischluft durch die Schlitze zum darüber liegenden Motor geleitet.

Die DE-AS 1 286 917 sagt jedoch nichts darüber aus, wie die vom Motor erwärmte Luft aus dem Motorraum abgeführt wird.

Die DE 36 17 538 A zeigt ein Kraftfahrzeug mit einer benachbart der Fahrbahn verlaufenden, aerodynamisch ausgebildeten Unterseite sowie mit Radhäusern für die Vorder- und Hinterräder. Um bei gutem Luftwiderstandsbeiwert einen das Fahrverhalten des Kraftfahrzeuges verbessernden Abtrieb zu erzeugen, sind an der Unterseite des Kraftfahrzeuges in Fahrtrichtung gesehen, vor den Radhäusern der Vorder- und/oder Hinterräder hochgezogene, nach unten hin offene Zuströmkanäle vorgesehen, die sich an den Radhäusern zwischen den Rädern erstrecken. Eine obere Begrenzungsfläche der Zuströmkanäle wird durch konvex verlaufende Formabschnitte gebildet, die in die Radhäuser einmünden.

Bei dieser Anordnung wird der im Fahrbetrieb zwischen der Unterseite des Kraftfahrzeuges und der Fahrbahn hindurchströmende Teilluftstrom durch Zustromkanäle gezielt in die Radhäuser und durch Abströmkanäle wieder aus den Radhäusern geleitet. Der Luftstrom bleibt jedoch stets an der der Fahrbahn zugekehrten Seite der Unterseite des Fahrzeuges bzw. eines Verkleidungsteils und gelangt nicht zu einem darüberliegenden Motor- und/oder Getrieberaum.

Aufgabe der Erfindung ist es, ein aerodynamisch ausgebildetes Verkleidungsteil für die Unterseite eines Kraftfahrzeuges gemäß der eingangs genannten Gattung so weiterzubilden, dass bei Nutzung des aerodynamischen Potentials eines glatten Unterbodens gleichzeitig die durch den Motor- und Getrieberaum strömende Luft gezielt und damit effizient zu- und abgeführt wird.

Erfindungsgemäß wird diese Aufgabe durch die Merkmale des Anspruchs 1 gelöst. Weitere die Erfindung in vorteilhafter Weise ausgestaltende Merkmale beinhalten die Unteransprüche.

Die mit der Erfindung hauptsächlich erzielten Vorteile sind darin zu sehen, dass durch die Anordnung von zumindest einer Absaugvorrichtung am Verkleidungsteil die durch den Motor- und Getrieberaum zirkulierende Luft definiert in eine kühlende Zuluftführung und eine die erwärmte Luft abführende Abluftführung aufgeteilt wird. Durch die räumlich versetzte Anordnung der zumindest einen Absaugvorrichtung zur Belüftungsöffnung wird erreicht, dass nur kalte Frischluft dem Motor- und Getrieberaum zugeführt wird, wogegen die erwärmte Luft seitlich neben der Belüftungsöffnung austritt und danach an der Unterseite des Fahrzeuges entlangströmt und nach hinten hin abgeführt wird.

Der Effekt der Absaugung entsteht durch aerodynamisch optimierte Absaugkiemen, die eine Unterdruckzone am Verkleidungsteil bilden. Die quer verlaufenden Absaugkiemen sind in Fahrzeuglängsrichtung gesehen hintereinanderliegend mit Abstand angeordnet und entgegen dem zwischen Fahrbahn und Verkleidungsteil hindurchgeführten Luftstrom angestellt. Die Absaugkiemen erstrecken sich vom Verkleidungsteil aus nach unten hin in Richtung Fahrbahn und haben einen schaufelförmigen Querschnitt. Die Form und Lage der Absaugkiemen wird für die jeweilige Kühlungsaufgabe angepasst und hat den Vorteil, dass die aerodynamischen Beiwerte nur unwesentlich beeinträchtigt werden.

Ein Ausführungsbeispiel der Erfindung ist in der Zeichnung dargestellt und wird im Folgenden näher erläutert:
Es zeigt
- Fig. 1: eine Seitenansicht eines Personenwagens mit einem benachbart der Fahrbahn verlaufenden aerodynamisch ausgebildeten Verkleidungsteil,
- Fig. 2: eine perspektivische Ansicht von schräg vorne auf einen Teilbereich des Verkleidungsteiles mit der erfindungsgemäßen Luftabsaugung für den oberhalb des Verkleidungsteiles liegenden Bereich,
- Fig. 3: einen vertikalen Schnitt durch das Verkleidungsteil mit der Belüftungsöffnung,
- Fig. 4: einen vertikalen Schnitt durch das Verkleidungsteil mit der Absaugvorrichtung.

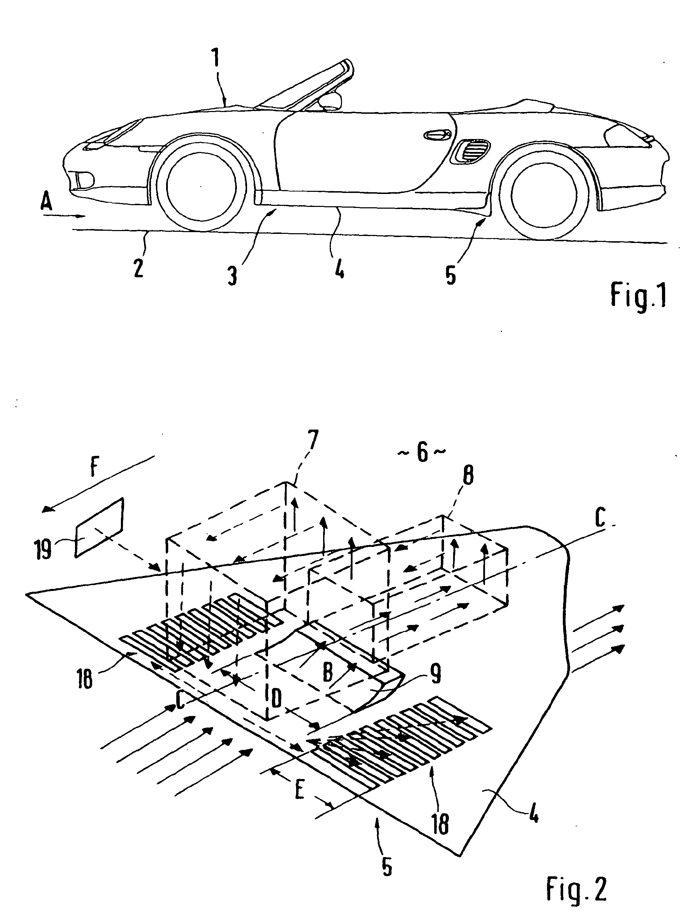

In Fig. 1 ist ein durch einen Personenwagen gebildetes Kraftfahrzeug 1 dargestellt, dessen benachbart einer Fahrbahn 2 verlaufende Unterseite 3 mit einem aerodynamisch ausgebildeten Verkleidungsteil 4 versehen ist. Das vorzugsweise aus Kunststoff oder Leichtmetall hergestellte Verkleidungsteil 4 ist zur Fahrbahn 2 hin glattflächig ausgebildet und in an sich bekannter Weise am darüber liegenden Aufbau in Lage gehalten. Es bedeckt vorzugsweise die gesamte Fahrzeugunterseite und kann ein- oder mehrteilig ausgebildet sein. Das dargestellte Kraftfahrzeug 1 ist mit einem Mittel- oder Heckmotor versehen.

Im Heckbereich 5 des Kraftfahrzeuges 1 erstreckt sich oberhalb des Verkleidungsteiles 4 ein Raum 6, der Aggregate und/oder Fahrwerksteile aufnimmt. Im Ausführungsbeispiel sind im Raum 6 ein Motor 7 und ein daran anschließendes Getriebe 8 angeordnet.

Damit bei einer vollständigen Unterbodenverkleidung bestimmte, oberhalb des Verkleidungsteiles 4 liegende Aggregate und/oder Fahrwerksteile im Fahrbetrieb eine ausreichende Kühlung erfahren, ist am Verkleidungsteil 4 zumindest eine Belüftungsöffnung 9 angeordnet, durch die ein Teilluftstrom B der zwischen Fahrbahn 2 und dem Verkleidungsteil 4 hindurchgeführten kalten Frischluft A nach oben hin in den Raum 6 abgezweigt wird. Die Belüftungsöffnung 9 erstreckt sich im Ausführungsbeispiel beiderseits einer Fahrzeuglängsmittelebene C-C und weist eine Breite D auf.

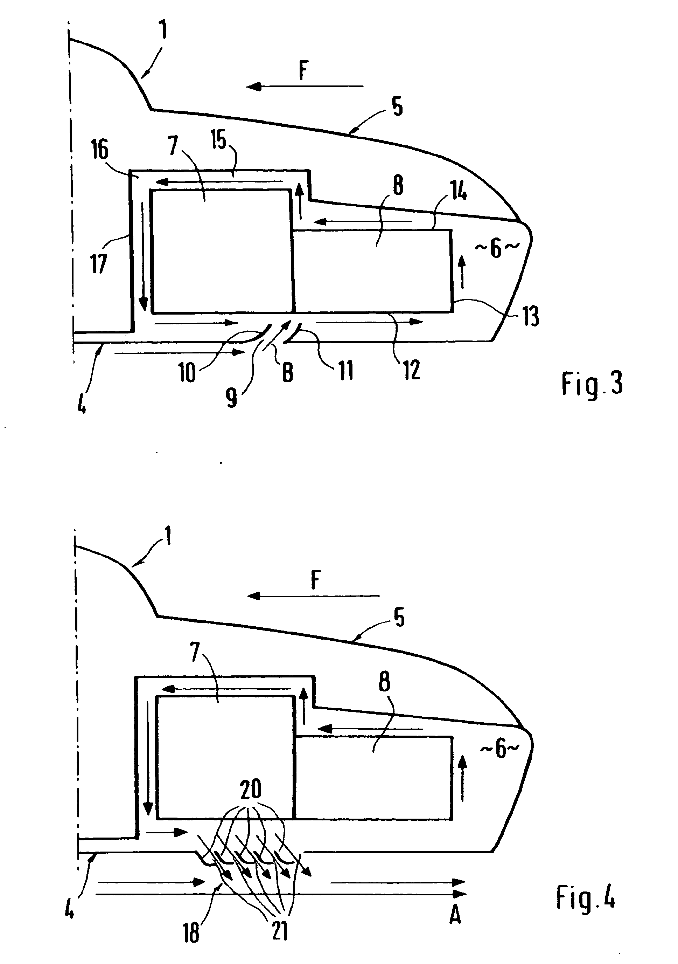

Am vorderen und hinteren Ende der in der Draufsicht gesehen etwa rechteckförmig ausgebildeten Belüftungsöffnung 9 sind am Verkleidungsteil 4 oder einem Aufsatzteil nach oben hin gerichtete bogenförmige Führungsabschnitte 10, 11 ausgebildet, durch die der Teilluftstrom B der kalten Frischluft A nach oben hin an die Unterseite des Getriebes 8 geführt wird. Der Teilluftstrom B strömt entlang der Getriebeunterseite 12, kühlt dabei diese Oberfläche ab und erwärmt sich dadurch. Die erwärmte Luft strömt am Getriebeende 13 nach oben und fließt an der Getriebeoberseite 14 und der Motoroberseite 15 nach vorne. Am vorderen oberen Ende 16 des Motors 7 wird die Luft wieder umgelenkt und strömt zwischen Motor 7 und einer angrenzenden quer verlaufenden aufrechten Schottwand 17 nach unten (Fig. 2 und 3).

Durch die erfindungsgemäße am Verkleidungsteil 4 vorgesehene zumindest eine Absaugvorrichtung 18 wird am vorderen unteren Ende des Motors 7 die Luft in Richtung der Absaugvorrichtung 18 umgelenkt. Hierbei strömt die Luft an den Auslasskrümmern der Abgasanlage vorbei und erhitzt sich stark. Die heiße Luft wird nun durch die Saugwirkung der Absaugvorrichtung 18 aus dem Motorraum 6 nach außen befördert, strömt an der Unterseite des Fahrzeuges entlang und wird nach hinten abgeführt.

Wird dem Motorraum 6 zusätzlich kühlende Frischluft durch eine weitere aufbauseitige Belüftungsöffnung 19 zugeführt, so folgt die Kühlluft der dargestellten Strömungsrichtung und verstärkt die Kühlwirkung um den Motor 7. Im Ausführungsbeispiel ist das Getriebe 8 hinter dem Motor 7 angeordnet. Die Funktion ist jedoch auch bei umgekehrter Anordnung gewährleistet.

Erfindungsgemäß wird die am Verkleidungsteil 4 vorgesehene zumindest eine Absaugvorrichtung 18 durch mehrere Absaugkiemen 20 gebildet, die in Fahrzeuglängsrichtung gesehen hintereinanderliegend angeordnet sind. Die Absaugkiemen 20 sind entgegen dem zwischen Verkleidungsteil 4 und Fahrbahn 2 hindurchströmenden Luftstrom A angestellt und erstrecken sich vom Verkleidungsteil 4 aus geringfügig nach unten in Richtung Fahrbahn 2 (Fig. 4). Zwischen den einzelnen Absaugkiemen 20 erstrecken sich quer verlaufende Luftdurchlassöffnungen 21. Im Ausführungsbeispiel sind zwei seitlich angeordnete Absaugvorrichtungen 18 vorgesehen, die sich beiderseits der mittigen Belüftungsöffnung 9 erstrecken und jeweils eine Breite E aufweisen. Es besteht jedoch auch die Möglichkeit, die Absaugvorrichtung 18 in einen mittleren Bereich und die Belüftungsöffnungen 9 in einem seitlich außenliegenden Bereichen des Verkleidungsteiles 4 anzuordnen. Beim Ausführungsbeispiel liegt das vordere Ende der Absaugvorrichtung 18 in Fahrtrichtung F gesehen vor der Belüftungsöffnung 9, wogegen das hintere Ende der Absaugvorrichtungen 18 etwa mit dem hinteren Ende der Belüftungsöffnung 9 zusammenfällt. Dies kann jedoch auch anders sein.

## Patentansprüche

1. Aerodynamisch ausgebildetes Verkleidungsteil (4) für die Unterseite (3) eines Kraftfahrzeuges (1), insbesondere Personenwagen, wobei am Verkleidungsteil (4) wenigstens eine Belüftungsöffnung (9) vorgesehen ist, durch die ein Teilluftstrom der zwischen dem Verkleidungsteil (4) und der Fahrbahn (2) in Fahrbetrieb hindurchströmenden kalten Frischluft zu einem darüber liegenden Aggregate und/oder Fahrwerksteile aufnehmenden Raum (6) wie Motor- und/oder Getrieberaum geleitet wird und die dort befindlichen Aggregate und/oder Fahrwerksteile kühlt, **dadurch gekennzeichnet, dass** am Verkleidungsteil (4) eine mittige Belüftungsöffnung (9) und seitlich außenliegende Absaugvorrichtungen (18) zum Abführen der im darüber liegenden Raum (6) befindlichen erwärmten Luft in Richtung Fahrbahn (2) vorgesehen sind, wobei die Absaugvorrichtungen (18) zumindest in Fahrzeugquerrichtung versetzt zur Belüftungsöffnung (9) angeordnet sind.

2. Verkleidungsteil nach Anspruch 1, **dadurch gekennzeichnet, dass** jede Absaugvorrichtung (18) durch mehrere quer verlaufende Absaugkiemen (20) gebildet wird, die in Fahrzeuglängsrichtung gesehen hintereinanderliegend angeordnet sind, wobei die Absaugkiemen (20) entgegen dem zwischen Fahrbahn (2) und Verkleidungsteil (4) hindurchgeführten Luftstrom (A) angestellt sind und dass jeweils zwischen zwei benachbarten Absaugkiemen (20) eine Luftdurchtrittsöffnung (21) angeordnet ist.

3. Verkleidungsteil nach Anspruch 2, **dadurch gekennzeichnet, dass** die Absaugkiemen (20) einstückig mit dem Verkleidungsteil (4) ausgebildet sind.

4. Verkleidungsteil nach Anspruch 2, **dadurch gekennzeichnet, dass** die Absaugkiemen (20) an einem separaten Aufsatzteil ausgebildet sind, das am Verkleidungsteil (4) befestigt ist.

5. Verkleidungsteil nach Anspruch 2, **dadurch gekennzeichnet, dass** sich die Absaugkiemen (20) vom Verkleidungsteil (4) nach unten hin in Richtung Fahrbahn (2) erstrecken.

## Claims

1. Aerodynamically formed trim part (4) for the underside (3) of a motor vehicle (1), in particular a passenger car, at least one ventilation opening (9) being provided on the trim part (4), through which a part air flow of the cold fresh air which flows through between the trim part (4) and the roadway (2) during driving operation is guided to a space (6), such as an engine and/or transmission compartment which lies above and accommodates assemblies and/or chassis parts, and cools the assemblies and/or chassis parts which are situated there, **characterized in that** a central ventilation opening (9) and extraction apparatuses (18) which lie laterally on the outside are provided on the trim part (4) for dissipating the heated air which is situated in the space (6) lying above it in the direction of the roadway (2), the extraction apparatuses (18) being arranged offset with respect to the ventilation opening (9) at least in the vehicle transverse direction.

2. Trim part according to Claim 1, **characterized in that** each extraction apparatus (18) is formed by a plurality of transversely extending extraction gills (20) which are arranged so as to lie behind one another as viewed in the vehicle longitudinal direction, the extraction gills (20) being set counter to the air flow (A) which is guided through between the roadway (2) and the trim part (4), and **in that** an air passage opening (21) is arranged in each case between two adjacent extraction gills (20).

3. Trim part according to Claim 2, **characterized in that** the extraction gills (20) are configured integrally with the trim part (4).

4. Trim part according to Claim 2, **characterized in that** the extraction gills (20) are formed on a separate attachment part which is fastened to the trim part (4).

5. Trim part according to Claim 2, **characterized in that** the extraction gills (20) extend downwards from the trim part (4) in the direction of the roadway (2).

## Revendications

1. Elément d'habillage aérodynamique (4) pour le dessous (3) d'un véhicule automobile (1), notamment d'un véhicule léger, sur lequel est prévue au moins une ouverture de ventilation (9) à travers laquelle un courant d'air partiel provenant de l'air frais et froid affluant pendant la conduite entre l'élément d'habillage (4) et la route (2) est guidé vers un espace (6) recevant des unités situées dessus et/ou des éléments du châssis, comme par exemple un espace pour le moteur et/ou la boîte de vitesses, et refroidit les unités s'y trouvant et/ou les éléments du châssis, **caractérisé en ce que** sur l'élément d'habillage (4) sont prévus une ouverture de ventilation centrale (9) et des dispositifs d'aspiration (18) situés latéralement à l'extérieur pour évacuer dans la direction de la route (2) l'air réchauffé se trouvant dans l'espace situé au-dessus (6), les dispositifs d'aspiration (18) étant disposés de manière décalée par rapport à l'ouverture de ventilation (9) au moins dans la direction transversale du véhicule.

2. Elément d'habillage selon la revendication 1, **caractérisé en ce que** chaque dispositif d'aspiration (18) est formé par plusieurs branchies d'aspiration (20) s'étendant transversalement, qui sont disposées les unes derrière les autres, vues dans la direction longitudinale du véhicule, les branchies d'aspiration (20) étant inclinées à l'encontre du courant d'air (A) guidé entre la route (2) et l'élément d'habillage (4) et **en ce qu'**une ouverture de passage d'air (21) est à chaque fois disposée entre deux branchies d'aspiration adjacentes (20).

3. Elément d'habillage selon la revendication 2, **caractérisé en ce que** les branchies d'aspiration (20) sont réalisées d'une seule pièce avec l'élément d'habillage (4).

4. Elément d'habillage selon la revendication 2, **caractérisé en ce que** les branchies d'aspiration (20) sont réalisées sur un élément rapporté séparé, qui est fixé sur l'élément d'habillage (4).

5. Elément d'habillage selon la revendication 2, **caractérisé en ce que** les branchies d'aspiration (20) s'étendent depuis l'élément d'habillage (4) vers le bas dans la direction de la route (2).
